(19) Europäisches Patentamt

European Patent Office

Office européen des brevets

(11) **EP 1 327 613 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.$^7$: **C03C 3/06**, C03C 4/00, C03B 19/14

(21) Anmeldenummer: **02027127.6**

(22) Anmeldetag: **04.12.2002**

(54) **Quarzglasrohling für ein optisches Bauteil und Verwendung desselben**

Quartz glass blank for preparing an optical component and its application

Ebauche en verre de silice pour la fabrication d'un element optique et application de celle-ci

(84) Benannte Vertragsstaaten:
**AT DE FR GB NL**

(30) Priorität: **06.12.2001 DE 10159959**

(43) Veröffentlichungstag der Anmeldung:
**16.07.2003 Patentblatt 2003/29**

(73) Patentinhaber: **Heraeus Quarzglas GmbH & Co. KG**
**63450 Hanau (DE)**

(72) Erfinder:
• **Kühn, Bodo**
**63450 Hanau (DE)**
• **Uebbing, Bruno, Dr.**
**63755 Alzenau (DE)**

(56) Entgegenhaltungen:
**EP-A- 0 546 196     EP-A- 0 720 970**
**WO-A-98/52879     US-A- 5 326 729**
**US-A- 5 908 482**

• **PATENT ABSTRACTS OF JAPAN vol. 018, no. 219 (C-1192), 20. April 1994 (1994-04-20) & JP 06 016449 A (SHINETSU QUARTZ PROD CO LTD), 25. Januar 1994 (1994-01-25)**
• **"CHEMICAL ABSTRACTS + INDEXES, AMERICAN CHEMICAL SOCIETY. COLUMBUS, US" CHEMICAL ABSTRACTS + INDEXES, AMERICAN CHEMICAL SOCIETY. COLUMBUS, US, XP000472140 ISSN: 0009-2258**

**Beschreibung**

Die vorliegende Erfindung betrifft einen Quarzglasrohling für ein optisches Bauteil zur Übertragung ultravioletter Strahlung einer Wellenlänge von 250 nm und kürzer.

Weiterhin betrifft die Erfindung eine Verwendung eines Quarzglasrohlings für die Herstellung eines Bauteils für den Einsatz in der Mikrolithographie in Verbindung mit ultravioletter Strahlung einer Wellenlänge von 250 nm und kürzer.

Optische Bauteile aus Quarzglas werden insbesondere für die Übertragung energiereicher, ultravioletter Laserstrahlung beispielsweise als optische Fasern oder in Form von Belichtungsoptiken in Mikrolithographiegeräten für die Herstellung hochintegrierter Schaltungen in Halbleiterchips eingesetzt. Die Belichtungssysteme moderner Mikrolithographiegeräte sind mit Excimerlasern bestückt, die energiereiche, gepulste UV-Strahlung einer Wellenlänge von 248 nm (KrF-Laser) oder von 193 nm (ArF-Laser) abgeben.

Kurzwellige UV-Strahlung kann in optischen Bauteilen aus synthetischem Quarzglas Defekte erzeugen, die zu Absorptionen führen. Neben den Bestrahlungsbedingungen hängen Art und Ausmaß einer Defektbildung und der dadurch induzierten Absorption von der Qualität des jeweiligen Quarzglases ab, die im wesentlichen durch strukturelle Eigenschaften, wie Dichte, Brechzahlverlauf und Homogenität und von der chemischen Zusammensetzung bestimmt wird.

Eine modellhafte Formel drückt diesen Zusammenhang zwischen den Bestrahlungsbedingungen, den Materialfaktoren und der induzierten Absorption $\alpha_{in}$ folgendermaßen aus:

$$\alpha_{in} = a \times \varepsilon^{b} \times P \qquad\qquad (1)$$

wobei a und b Materialfaktoren sind und $\varepsilon$ und P für die Energiedichte bzw. die Pulszahl stehen.

Die Anzahl der induzierten strukturellen Defekte und die dadurch induzierte Absorption sind also abhängig von der Anzahl der einwirkenden Laserpulse und deren Energiedichte sowie von Materialfaktoren.

Der Einfluß der chemischen Zusammensetzung des Quarzglases auf das Schädigungsverhalten bei der Bestrahlung mit energiereichem UV-Licht ist beispielsweise in der EP-A1 401 845 beschrieben. Eine hohe Strahlenbeständigkeit ergibt sich demnach bei einem Quarzglas, das sich durch hohe Reinheit, einen OH-Gehalt im Bereich von 100 bis ca. 1000 Gew-ppm und gleichzeitig durch eine Wasserstoffkonzentration von mindestens $5 \times 10^{16}$ Molekülen pro $cm^3$ (bezogen auf das Volumen des Quarzglases) auszeichnet. Weiterhin weist das bekannte synthetische Quarzglas eine Spannungsdoppelbrechung von weniger als 5 nm/cm auf, und es ist weitgehend frei von Sauerstoffdefektstellen.

In der EP-A1 401 845 werden außerdem Verfahren zur Herstellung von synthetischem Quarzglas durch Flammenhydrolyse siliciumhaltiger Verbindungen beschrieben. Diese lassen sich anhand der Ausgangssubstanzen und der Art und Weise der Verglasung der abgeschiedenen $SiO_2$-Partikel unterscheiden. Eine häufig eingesetzte Ausgangssubstanz bei der Herstellung von synthetischem Quarzglas durch Flammenhydrolyse ist $SiCl_4$. Es werden aber auch andere, beispielsweise chlorfreie siliziumhaltige organische Verbindungen verwendet, wie Silane oder Siloxane. In jedem Fall werden auf einem rotierenden Substrat $SiO_2$-Partikel schichtweise abgeschieden. Bei hinreichend hoher Temperatur auf der Oberfläche des Substrats kommt es zu einem unmittelbaren Verglasen der $SiO_2$-Partikel ("Direktverglasen"). Im Unterschied dazu wird bei dem sogenannten "Sootverfahren" die Temperatur während der Abscheidung der $SiO_2$-Partikel so niedrig gehalten, dass ein poröser Sootkörper gebildet wird, bei dem $SiO_2$-Partikel nicht oder wenig verglast sind. Das Verglasen unter Bildung von Quarzglas erfolgt beim Sootverfahren durch nachträgliches Sintern des Sootkörpers. Beide Herstellungsverfahren führen zu einem dichten, transparenten, hochreinen Quarzglas, wobei die Herstellungskosten beim Sootverfahren niedriger sind als beim Direktverglasen.

Um mechanische Spannungen innerhalb des Rohlings abzubauen und um eine homogene Verteilung der fiktiven Temperatur zu erreichen, wird dieser üblicherweise getempert. In der EP-A 401 845 wird ein Temperprogramm vorgeschlagen, bei dem der Rohling einer 50-stündigen Haltezeit bei einer Temperatur von etwa 1100 °C unterzogen wird und abschließend in einem langsamen Abkühlschritt mit einer Abkühlrate von 2 °/h auf 900 °C und dann im geschlossenen Ofen auf Raumtemperatur abgekühlt wird. Bei dieser Temperaturbehandlung kann es durch Ausdiffusion von Komponenten - insbesondere von Wasserstoff - zu lokalen Veränderungen der chemischen Zusammensetzung und zu einem Konzentrationsgradienten von den oberflächennahen Bereichen des Rohlings nach Innen kommen. Zur Verbesserung der Strahlenbeständigkeit des Quarzglases infolge der defektausheilenden Wirkung von Wasserstoff wird in der EP-A1 401 845 empfohlen, den getemperten Quarzglas-Rohling nachträglich mit Wasserstoff zu beladen, indem dieser bei erhöhter Temperatur in wasserstoffhaltiger Atmosphäre behandelt wird.

In der Literatur sind eine Vielzahl von Schädigungsmustem beschrieben, bei denen es bei andauemder UV-Bestrahlung zu einem Anstieg der Absorption kommt. Die induzierte Absorption kann zum Beispiel linear ansteigen, oder es wird nach einem anfänglichen Anstieg eine Sättigung erreicht. Weiterhin wird beobachtet, dass eine anfänglich registrierte Absorptionsbande zunächst wenige Minuten nach Abschalten des Lasers verschwindet, sich aber nach erneuter Bestrahlung schnell wieder auf dem einmal erreichten Niveau wiederherstellt. Dieses Verhalten wird als "rapid-damage-process" (RDP) bezeichnet. Hintergrund diesen Verhaltens ist, dass Wasserstoffmoleküle die Netzwerkdefekte im Quarzglas absättigen, wobei aber die Stabilität der Bindungen an den Defektstellen gering ist, so dass sie erneut aufbrechen, wenn das Bauteil wieder bestrahlt wird. Es ist auch ein Schädigungsverhalten bekannt, bei dem sich strukturelle Defekte offenbar derart kumulieren, dass sie sich in einer plötzlichen, starken Zunahme der Absorption äußern. Der starke Anstieg der Absorption bei dem zuletzt beschriebenen Schädigungsverhalten wird in der Literatur als SAT-Effekt bezeichnet.

Bei dem aus der EP-A1 401 845 bekannten Quarzglas verursacht UV-Strahlung nur eine vergleichsweise geringe Absorptionszunahme, so dass sich dieses Quarzglas insoweit durch eine hohe Beständigkeit gegenüber kurzwelliger UV-Strahlung auszeichnet. Jedoch können neben dem Auftreten von Absorption bzw. reduzierter Transmission auch andere Schädigungsmechanismen wirksam werden, die sich beispielsweise in der Generierung von Fluoreszenz oder in einer Veränderung des Brechungsindex zeigen können.

Ein bekanntes Phänomen in diesem Zusammenhang ist die sogenannte "Kompaktierung", die während bzw. nach Laser-Bestrahlung mit hoher Energiedichte auftritt. Dieser Effekt äußerst sich in einer lokalen Dichteerhöhung, die zu einem Anstieg des Brechungsindex und damit zu einer Verschlechterung der Abbildungseigenschaften des optischen Bauteils führt.

Ein gegenteiliger Effekt kann jedoch ebenso auftreten, wenn ein optisches Bauteil aus Quarzglas einer Laserstrahlung geringer Energiedichte aber hoher Pulszahl ausgesetzt wird. Unter diesen Bedingungen wird eine sogenannte "Dekompaktierung" beobachtet (in der angelsächsischen Literatur auch als "rarefaction" bezeichnet), die mit einer Erniedrigung des Brechungsindex einhergeht. Dies führt zu einer Verschlechterung der Abbildungseigenschaften. Dieser Schädigungsmechanismus ist beschrieben von C. K. Van Peski, R. Morton und Z. Bor ("Behaviour of fused silica irradiated by low level 193 nm excimer laser for tens of billions of pulses", J. Non-Cryst. Solids 265 (2000) S.285-289).

Kompaktierung und Dekompaktierung sind somit Defekte, die sich nicht zwangsläufig in einer Zunahme der strahlungsinduzierten Absorption äußeren, die aber die Lebensdauer eines optischen Bauteils begrenzen können.

Der vorliegenden Erfindung liegt daher die Aufgabe zugrunde, einen Rohling aus synthetischem Quarzglas für ein optisches Bauteil für die Übertragung ultravioletter Strahlung einer Wellenlänge von 250 nm und kürzer bereitzustellen, das eine geringe induzierte Absorption aufweist und das gleichzeitig hinsichtlich Kompaktierung und Dekompaktierung optimiert ist. Weiterhin liegt der Erfindung die Aufgabe zugrunde, eine geeignete Verwendung dafür anzugeben.

Hinsichtlich des Rohlings wird diese Aufgabe erfindungsgemäß durch eine Ausführungsform eines Quarzglas-Rohlings gelöst, der die Kombination folgender Eigenschaften aufweist:

■   eine Glasstruktur im wesentlichen ohne Sauerstoffdefektstellen,

■   einen $H_2$-Gehalt im Bereich von $3 \times 10^{17}$ Molekülen/cm$^3$ bis $2{,}0 \times 10^{18}$ Molekülen/cm$^3$,

■   einem OH-Gehalt im Bereich von 500 Gew-ppm bis 1000 Gew-ppm,

■   einem Gehalt an SiH-Gruppen von weniger als $2 \times 10^{17}$ Moleküle/cm$^3$

■   einem Chlorgehalt im Bereich von 60 Gew-ppm bis 120 Gew-ppm,

■   einer Inhomogenität im Brechungsindex $\Delta n$ von weniger als 2 ppm und

■   einer Spannungsdoppelbrechung von weniger als 2 nm/cm.

Unter einer Glasstruktur, die im wesentlichen frei von Sauerstoffdefektstellen ist, wird hier eine Glasstruktur verstanden, bei der die Konzentrationen von Sauerstoff-Unterschussdefekten und von Sauerstoff-Überschussdefekten unterhalb der Nachweisbarkeitsgrenze der Methode von Shelby liegen. Diese Nachweis-Methode ist veröffentlicht in "Reaction of hydrogen with hydroxyl-free vitreous silica" (J. Appl. Phys., Vol. 51, No. 5 (Mai 1980), S. 2589-2593). Quantitativ ergibt sich dabei eine Anzahl an Sauerstoff-Unterschussdefekten oder an Sauerstoff-Überschussdefekten in der Glasstruktur von nicht mehr als etwa $10^{17}$ pro Gramm Quarzglas.

Idealerweise sind die angegebenen Komponenten über das Volumen des optischen Bauteils gleichmäßig verteilt. Die genannten Konzentrationsangaben beziehen sich hier auf den optisch genutzten Bereich des Bauteils .

Der OH-Gehalt ergibt sich durch Messung der IR-Absorption nach der Methode von D. M. Dodd et al. ("Optical Determinations of OH in Fused Silica", J. Appl. Physics (1966), S. 3911). Der $H_2$-Gehalt wird anhand einer Raman-Messung ermittelt, die erstmals von Khotimchenko et al. vorgeschlagen worden ist ("Determining the Content of Hydrogen Dissolved in Quartz Glass Using the Methods of Raman Scattering and Mass Spectrometry" Zhurnal Prikladnoi Spektroskopii, Vol. 46, No. 6 (Juni 1987), S. 987-991). Der Gehalt an SiH-Gruppen wird mittels Raman-Spektroskopie ermittelt, wobei eine Kalibrierung anhand einer chemischen Reaktion mit Wasserstoff erfolgt:

$Si-O-Si + H_2 \rightarrow Si-H + Si-OH$ , wie in Shelby "Reaction of hydrogen with hydroxyl-free vitreous silica" (J. Appl. Phys., Vol. 51, No. 5 (Mai 1980), S. 2589-2593) beschrieben. Der Chlorgehalt des Quarzglases wird chemisch anhand einer Fällung von Chlor als Silberchlorid oder unter Verwendung einer ionenselektiven Elektrode ermittelt.

Die Inhomogenität des Brechungsindex $\Delta n$ wird interferometrisch bei einer Wellenlänge von 633 nm (He-Ne-Laser) bestimmt, wobei sich $\Delta n$ als Differenz zwischen dem Maximalwert und dem Minimalwert der Brechungsindexverteilung ergibt, gemessen über dem optisch genutzten Flächenbereich, auch CA Bereich ("clear aperture") genannt. Der CA Bereich ergibt sich durch Projektion des durchstrahlten Volumens auf eine Ebene senkrecht zur Durchstrahlungsrichtung.

Die Spannungsdoppelbrechung wird interferometrisch bei einer Wellenlänge von 633 nm (He-Ne-Laser) nach der in "Measurement of the Residual Birefingence Distribution in Glass Laser Disk by Transverse Zeeman Laser" (Electronics and Communications in Japan, Part 2, Vol. 74, No. 5, 1991; (übersetzt aus Denshi Joho Tsushin Gakkai Ronbunshi Vol. 73-C-I, No. 10, 1990 pp. 652 - 657) beschriebenen Methode ermittelt.

Gegenüber den bisher in der Literatur beschriebenen und im Hinblick auf eine hohe Strahlenbeständigkeit gegenüber kurzwelliger UV-Strahlung ausgelegten Quarzglas-Qualitäten, zeichnet sich das Quarzglas, aus dem der erfindungsgemäße Rohling besteht unter anderem durch relativ hohe $H_2$- und OH-Gehalte einerseits und durch einen Chlorgehalt mit einem vergleichsweise engen Konzentrationsbereich zwischen 60 Gew-ppm und 120 Gew-ppm andererseits aus.

Derartiges Quarzglas ist mittels des oben beschriebenen "Sootverfahrens" nicht ohne weiteres herstellbar. Denn beim Sootverfahren wird üblicherweise Quarzglas mit einem OH-Gehalt im Bereich einiger Gew-ppm- bis 200 Gew-ppm erhalten, wobei der $H_2$-Gehalt infolge der Temperaturbehandlungen beim Verglasen und beim Homogenisieren des Quarzglases typischerweise unterhalb der Nachweisgrenze liegt. Demgegenüber sind für Quarzglas, das durch Direktverglasen hergestellt wird OH-Gehalte von 450 bis 1200 Gew.-ppm und $H_2$-Gehalte um $1 \times 10^{18}$ Moleküle/$cm^3$ typisch. Es hat sich überraschend gezeigt, dass sich bei einem derartigen Quarzglas Chlor günstig auf die Strahlenbeständigkeit auswirkt, wenn das Chlor in einem engen Konzentrationsbereich zwischen 60 Gew-ppm bis 120 Gew-ppm vorliegt. Bei einem Chlorgehalt oberhalb von 120 Gew-ppm wird verstärkt induzierte Absorption aufgrund der Mitwirkung von Chlorradikalen bei der Defektzentrengeneration beobachtet ($SiOSi + Cl^* \rightarrow SiCl+SiO^* \rightarrow (+H_2+h\nu)$ $SiOH+SiH+Cl^*$), während sich ein Chlorgehalt von weniger als 60 Gew-ppm ungünstig auf das Dekompaktierungsverhalten auswirkt.

Es hat sich gezeigt, dass ein optisches Bauteil, das aus einem Quarzglas-Rohling mit den oben genannten Eigenschaften gefertigt wird, die Schädigungsmechanismen, die zu Kompaktierung und Dekompaktierung führen, vermieden oder zumindest deutlich reduziert sind. Brechzahländerungen im Verlauf des bestimmungsgemäßen Einsatzes deratiger Bauteile werden vollständig oder weitgehend vermieden, so dass die genannten Schädigungsmechanismen die Lebensdauer der aus dem erfindungsgemäßen Rohling gefertigten optischen Bauteile nicht begrenzen.

Diese Wirkung der oben genannten Eigenschafts-Kombination auf das Schädigungsverhalten gegenüber kurzwelliger UV-Strahlung mit Energiedichten von mehr als 0,05 mJ/$cm^2$ ist empirisch nachgewiesen worden, wie im Folgenden noch näher erläutert wird. Dabei hat sich außerdem gezeigt, dass bei derartigen Energiedichten OH-Gehalte von weniger als 500 Gew-ppm zu Kompaktierung führen. Quarzglas mit einem OH-Gehalt oberhalb von 1000 Gew-ppm zeigt eine stärkere Tendenz zu Dekompaktierung.

Der zu RDP führende Schädigungsmechanismus wirkt sich bei $H_2$-Gehalten von mehr als $2,0 \times 10^{18}$ Molekülen/$cm^3$ besonders deutlich aus. Wogegen bei einem $H_2$-Gehalt von weniger als $3 \times 10^{17}$ Molekülen/$cm^3$ die oben erwähnte defektausheilende Wirkung von Wasserstoff gegenüber kurzwelliger UV-Strahlung mit Energiedichten von mehr als 0,05 mJ/$cm^2$ so gering ist, dass es während des bestimmungsgemäßen Einsatzes des optischen Bauteils zu nicht tolerierbaren Transmissionsverlusten kommt.

Demgegenüber ist beim erfindungsgemäßen Rohling das Quarzglas sowohl im Hinbiick auf Kompaktierung als auch Dekompaktierung optimiert, und es weist gleichzeitig eine geringe induzierte Absorption gegenüber kurzwelliger UV-Strahlung auf.

Es hat sich als besonders günstig erwiesen, wenn der OH-Gehalt im Rohling im Bereich von 600 Gew-ppm bis 900 Gew-ppm, insbesondere im Bereich von 750 Gew-ppm bis 900 Gew-ppm liegt. Ein OH-Gehalt in diesem Bereich stellt einen bevorzugten Kompromiss zwischen Dekompaktierung und Kompaktierung einerseits und RDP andererseits dar, wenn das Quarzglas mit UV-Strahlung mit Energiedichten von mehr als 0,05 mJ/$cm^2$ eingesetzt werden soll.

Im Hinblick hierauf liegt der $H_2$-Gehalt vorteilhafterweise im Bereich von $5 \times 10^{17}$ Molekülen/$cm^3$ bis $1 \times 10^{18}$ Molekülen/$cm^3$. Bei einem Quarzglas-Rohling mit einem $H_2$-Gehalt in diesem Bereich ist sowohl die günstige, defektausheilende Wirkung des Wasserstoffs in besonders hohem Maße vorhanden, und es wird gleichzeitig Dekompaktierung weitgehend vermieden.

Vorzugsweise weist der Quarzglasrohling einen Chlorgehalt im Bereich von 80 Gew-ppm bis 100 Gew-ppm auf. Bei einem Chlorgehalt innerhalb dieses engen Konzentrationsbereichs wird insbesondere bei einem Einsatz des Quarzglas-Rohlings in Verbindung mit UV-Strahlung hoher Energiedichten von mehr als 0,05 mJ/cm$^2$ eine geringe Dekompaktierung und induzierte Absorption erreicht.

Hinsichtlich der Verwendung des Quarzglasrohlings wird die oben angegebene Aufgabe erfindungsgemäß dadurch gelöst, dass für einen Einsatz mit ultravioletter Strahlung einer vorgegebenen Pulsenergiedichte $\varepsilon$ von mindestens 0,05 mJ/cm$^2$ und für eine vorgegebene Pulszahl P ein Quarzglas ausgewählt wird, das einen Mindestwasserstoffgehalt $C_{H2min}$ und einen Maximalwasserstoffgehalt $C_{H2max}$ aufweist, die folgenden Bemessungsregeln genügen:

$$G_{H2min} \ [\text{Moleküle/cm}^3] = 1{,}0 \times 10^8 \ \varepsilon^2 \ P \qquad (2)$$

und

$$C_{H2max} \ [\text{Moleküle/cm}^3] = 2 \times 10^{19} \ \varepsilon \qquad (3)$$

Durch die Einstellung des Wasserstoffgehalts anhand der Bemessungsregeln (2) und (3) wird das Quarzglas hinsichtlich seines Schädigungsverhaltens gegenüber kurzwelliger UV-Strahlung weiter optimiert. Bemessungsregel (2) ergibt eine Mindestkonzentration an Wasserstoff in Abhängigkeit von den Bestrahlungsbedingungen (Pulsenergiedichte und Pulszahl) an, unterhalb von der die defektausheilende Wirkung von Wasserstoff so gering ist, dass es während des bestimmungsgemäßen Einsatzes des optischen Bauteils zu nicht tolerierbaren Transmissionsverlusten kommt. Bemessungsregel (3) hingegen definiert eine Obergrenze an Wasserstoff in Abhängigkeit von der Pulsenergiedichte, oberhalb der vermehrt RDP bzw. Dekompaktierung auftritt. Die angegebenen Wasserstoff-Konzentrationen beziehen sich jeweils auf den optisch genutzten Bereich innerhalb des Quarzglas-Rohlings (CA-Bereich). Üblicherweise handelt es sich dabei um den zentralen Bereich des Baueils bzw. des Quarzglas-Rohlings.

Vorzugsweise wird ein Quarzglas ausgewählt, das einen OH-Gehalt $C_{OH}$ in einem Bereich aufweist, der folgender Bemessungsregel genügt:

$$C_{OH} \ [\text{Gew-ppm}] = 1700 \ \varepsilon[\text{mJ/cm}^2]^{0.4} \pm 50 \qquad (4)$$

Im Idealfall tritt weder Kompaktierung noch Dekompaktierung auf. In der Praxis wird aber in Abhängigkeit von den Bestrahlungsbedingungen und den Quarzglas-Eigenschaften entweder Kompaktierung oder Dekompaktierung beobachtet. Es wurde überraschend gefunden, dass ein Quarzglas mit einem nach Bemessungsregel (4) ausgelegten OH-Gehalt dem genannten Idealfall nahe kommt, das heißt es zeigt weder eine auffällige Kompaktierung noch eine nennenswerte Dekompaktierung, , wenn es kurzwelliger UV-Strahlung einer Wellenlänge von < 250 nm mit einer Pulsenergiedichte $\varepsilon$ von mehr als 0,05 mJ/cm$^2$ ausgesetzt wird.

Für eine Pulsenergiedichte im Bereiche der genannten Untergrenze $\varepsilon$ = 0,05 mJ/cm$^2$ ergibt die Bemessungsregel (4) einen OH-Gehalt von 513 Gew-ppm.

Die Bemessungsregel (4) hat sich insbesondere für die Festlegung des OH-Gehalts im Hinblick auf geringe Kompaktierung und gleichzeitig geringe Dekompaktierung bewährt, wenn die Pulsenergiedichte kleiner als 0,3 mJ/cm$^2$, vorzugsweise kleiner als 0,15 mJ/cm$^2$, ist.

Für den oberen Grenzwert $\varepsilon$ = 0,3 mJ/cm$^2$ ergibt sich dabei nach Bemessungsregel (4) ein OH-Gehalt zwischen 1000Gew-ppm und 1100 Gew-ppm.

Nachfolgend wird die Erfindung anhand von Ausführungsbeispielen und anhand Zeichnung näher erläutert. Dabei zeigt

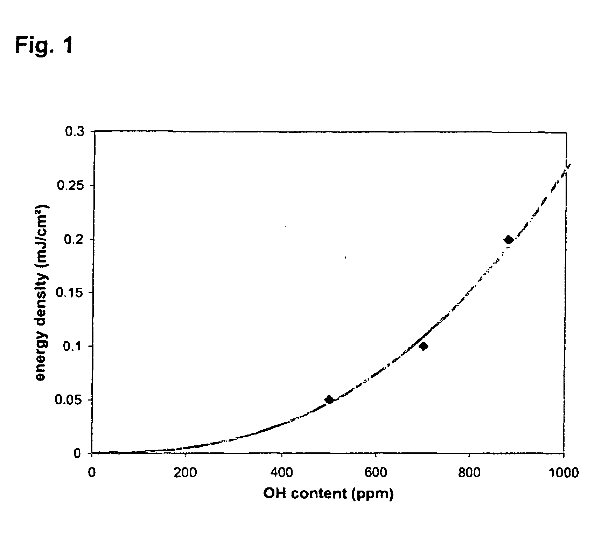

**Figur 1** ein Diagramm zur Erläuterung des Auftretens von Kompaktierung oder Dekompaktierung in Abhängigkeit vom OH-Gehalt des Quarzglases und der Pulsenergiedichte der Strahlung.

Bei dem Diagramm in **Figur 1** ist der OH-Gehalt $C_{OH}$ in Gew-ppm (in der Figur angegeben als "OH content") gegen die Pulsenergiedichte $\varepsilon$ in mJ/cm$^2$ (in der Figur angegeben als "energy density") aufgetragen. Die eingezeichnete Kurve beruht auf Schädigungsmessungen bei verschiedenen Quarzglas-Qualitäten, die sich in ihrem OH-Gehalt unterscheiden. Die Messung erfolgt unter Laserstrahlung einer Wellenlänge von 193 nm und bei einer Laserpulslänge zwischen 20 und 50 Nanosekunden. Die Laserpulslänge wird nach der in V. Liberman, M. Rothschild, J.H.C. Sedlacek, R.S. Uttaro, A. Grenville "Excimer-laser-induced densification of fused silica: laser-fluence and material-grade effects on scaling law", Journal Non-Cryst.Solids 244 (1999) S.159-171 beschriebenen Methode bestimmt.

Die unter den vorgenannten Bedingungen ermittelten Messwerte sind als Rauten dargestellt. Die Kurve repräsentiert diejenigen $C_{OH}/\varepsilon$-Paare, bei denen weder Kompaktierung noch Dekompaktierung beobachtet wird. Der Bereich (1) oberhalb der Kurve kennzeichnet den Bereich, in dem Kompaktierung auftritt, und der Bereich (2) unterhalb der Kurve kennzeichnet den Bereich, in dem Dekompaktierung auftritt.

Der Verlauf der Kurve lässt sich durch die Formel (4):

$$C_{OH} \text{ [Gew-ppm]} = 1700 \cdot \varepsilon \text{ [mJ/cm}^2\text{]}^{0.4} \pm 50$$

annähernd beschreiben.

Anhand der Kurve oder der Formel (4) kann somit für jede Pulsenergiedichte zwischen 0,05 und 0,3 mJ/cm$^2$ der OH-Gehalt ausgewählt werden, den ein Quarzglas aufweisen muss, damit es weder Kompaktierung noch Dekompaktierung zeigt.

Beispiele für derartige Quarzgläser und Vergleichsbeispiele dazu zeigt Tabelle 1.

Tabelle 1

| 1 | 2 | 3 | 4 | 5 | 6 | 7 | 8 | 9 | 10 | 11 | 12 |
|---|---|---|---|---|---|---|---|---|---|---|---|
| Nr. | OH-Gehalt [Gew-ppm] | H2-Gehalt [Moleküle/ cm$^3$] | Cl-Gehalt [Gew-ppm] | SiH-Gruppen [Moleküle/ cm$^3$] | O$^\pm$ [g$^{-1}$] | $\Delta$n [ppm] | $\Lambda$ [nm/cm] | $\varepsilon$ [mJ/cm$^2$] | Kompak- tierung | Dekom- paktierung | Induzierte Absorption |
| 1 | 700 | $1 \times 10^{18}$ | 90 | $7 \times 10^{16}$ | $< 10^{17}$ | < 2 | < 2 | 0,1 | nein | nein | nein |
| 2 | 700 | $1 \times 10^{18}$ | 90 | $7 \times 10^{16}$ | $< 10^{17}$ | < 2 | < 2 | 0,3 | ja | nein | nein |
| 3 | 700 | $1 \times 10^{18}$ | 30 | $7 \times 10^{16}$ | $< 10^{17}$ | < 2 | < 2 | 0,1 | nein | ja | nein |
| 4 | 700 | $1 \times 10^{18}$ | 200 | $7 \times 10^{16}$ | $< 10^{17}$ | < 2 | < 2 | 0,1 | nein | nein | Ja |
| 5 | 880 | $5 \times 10^{17}$ | 90 | $<5 \times 10^{16}$ | $< 10^{17}$ | < 2 | < 2 | 0,2 | nein | nein | nein |
| 6 | 880 | $5 \times 10^{17}$ | 90 | $<5 \times 10^{16}$ | $< 10^{17}$ | < 2 | < 2 | 0.05 | nein | ja | nein |
| 7 | 500 | $5 \times 10^{17}$ | 90 | $< 5 \times 10^{16}$ | $< 10^{17}$ | < 2 | <2 | 0,05 | nein | nein | nein |

EP 1 327 613 B1

Tabelle 1 zeigt die Ergebnisse von Bestrahlungsmessungen an Quarzglas-Rohlingen unterschiedlicher chemischer Zusammensetzung und bei verschiedenen Bestrahlungsbedingungen. In den drei letzten Spalten der Tabelle ist qualitativ angegeben, ob der jeweilige Rohling Kompaktierung, Dekompaktierung oder induzierte Absorption zeigt.

Die in den Spalten 2 bis 8 genannten Eigenschaften werden jeweils an einem zylinderförmigen Quarzglasrohling mit einem Außendurchmesser von 240 mm und einer Dicke von 60 mm ermittelt. Es handelt sich dabei um Rohlinge für Linsen für ein Mikrolithographiegerät, das mit Excimer-Laserstrahlung mit einer Wellenlänge von 193 nm arbeitet. Abgesehen von einem geringen Übermaß, das bei der Fertigung der Linse noch abgetragen wird, entsprechen die Rohling-Abmessungen auch den Linsenabmessungen. Das dem CA-Bereich der daraus erhaltenen Linse entsprechende Quarzglas-Volumen wird hier durch die Kreisfläche der Linse - abzüglich eines Randes von wenigen Millimetern für die Linsenfassung - und der Dicke bestimmt. In der Spalte "O$^{\pm}$" von Tabelle 1 ist die Sauerstoffdefektstellen-Konzentration angegeben, in der Spalte "$\Delta n$" die über den CA-Bereich ermittelte Brechungsindexdifferenz, und in der Spalte "$\Lambda$" die im CA-Bereich ermittelte maximale Doppelbrechung.

Zur Durchführung der Bestrahlungsversuche wurden aus den jeweiligen Quarzglas-Rohlingen stabförmige Proben mit einer Abmessung von 25 x 25 x 200 mm$^3$ entnommen und in gleicher Art und Weise vorbereitet (Politur der gegenüberliegenden 25 x 25 mm$^2$ -Flächen).

Zur Klärung des Schädigungsverhaltens der Proben hinsichtlich Kompaktierung oder Dekompaktierung wurden die Proben mit UV-Strahlung einer Wellenlänge von 193 nm bestrahlt, wobei die Pulsenergiedichte variiert wurde, wie in Spalte 8 von Tabelle 1 angegeben. Die Pulszahl bei diesen Bestrahlungsversuche betrug jeweils 5 Milliarden.

In der Spalte "Induzierte Absorption" sind zwei Schädigungsmechanismen zusammengefasst, die sich in einem Anstieg der Absorption äußern, nämlich die lineare Absorptionszunahme und der eingangs beschriebene RDP. Zur Klärung des Schädigungsverhaltens der Proben hinsichtlich induzierter Absorption wurden die Proben ebenfalls mit UV-Strahlung einer Wellenlänge von 193 nm und mit der in Spalte 8 genannten Pulsenergiedichte bestrahlt. Zur Feststellung des RDPs genügt eine Pulszahl von 1 Million Pulsen, während für die Ermittlung der linearen Absorptionszunahme eine Pulszahl von mindestens 1 Milliarde Pulsen erforderlich ist. Hierzu wird der Transmissionsverlust der Probe bestimmt, indem während der Bestrahlung die Intensitätsabnahme des verwendeten Laserstrahls nach Durchgang durch die Probe bestimmt wird.

Nach den Bestrahlungsversuchen wurden Kompaktierung und Dekompaktierung bestimmt, indem mit einem handelsüblichen Interferometer (Zygo GPI-XP) bei einer Wellenlänge von 633nm, die relative Zunahme bzw. Abnahme der Brechzahl im bestrahlten Bereich im Vergleich zum unbestrahlten Bereich gemessen wurde.

Die Quarzglas-Rohlinge sind zur Herstellung von optischen Linsen für ein Mikrolithographiegerät für einen Einsatz mit UV-Strahlung einer Wellenlänge von 193 nm ausgelegt, wobei das optische Bauteil im Verlauf seines bestimmungsgemäßen Einsatzes typischerweise einer Strahlung mit einer Energiedichte von etwa 0,1 mJ/cm$^2$ ausgesetzt wird. Typische Pulszahlen liegen zwischen $10^{11}$ und $10^{12}$.

Die Rohlinge 1 bis 4 gemäß Tabelle 1 wurden folgendermaßen hergestellt:

Es handelt sich um nach dem Direktverglasungsverfahren hergestellte Quarzgläser. Auf einem scheibenförmigen, um seine Mittelachse rotierenden Substrat wird mittels eines Knallgasbrenners feinteiliges SiO$_2$ abgeschieden, das unmittelbar durch die Hitze der Knallgasflamme unter Bildung eines stabförmigen Quarzglasrohlings verglast wird. Der Wasserstoffgehalt liegt in diesem Verfahrensstufe noch bei etwa 2 x $10^{18}$ Molekülen/cm$^3$.

Wie aus Tabelle 1 ersichtlich, unterscheiden sich die Rohlinge 1 bis 4 lediglich in den jeweiligen Chlorgehalten. Der Cl-Gehalt wird durch Vorgabe der Flußraten für H$_2$, O$_2$ und SiCl$_4$ eingestellt.

Außerdem wird anhand Bemessungsregel (4) der OH-Gehalt festgelegt, der in Verbindung mit der typischen Einsatz-Pulsenergiedichte von etwa 0,1 mJ/cm$^2$ einzustellen ist. Die Einstellung des OH Gehalts erfolgt ebenfalls über die Flußraten der Einzelmedien (H$_2$, O$_2$ und SiCl$_4$). Dadurch ergibt sich ein OH-Gehalt von etwa 700 Gew-ppm, der somit innerhalb des Bereiches liegt, der durch Bemessungsregel (4) für $\varepsilon$ = 0,1 mJ/cm$^2$ folgendermaßen spezifiziert ist:

$$C_{OH} \text{ [Gew-ppm]} = 1700 \cdot \varepsilon \text{ [mJ/cm}^2\text{]}^{0,4} \qquad \pm 50 \qquad \rightarrow 677 \pm 50 \text{ Gew-ppm}$$

Weiterhin wird der Wasserstoffgehalt anhand den Bemessungsregeln (2) und (3) festgelegt, wie er in Verbindung mit der typischen Einsatz-Pulsenergiedichte von etwa 0,1 mJ/cm$^2$ einzustellen ist. Die Einstellung des vorgegebenen H$_2$-Gehalts erfolgt durch Tempern der Rohlinge bei 1100°C.

Dadurch ergibt sich ein H$_2$-Gehalt von 1,4 x $10^{18}$ Molekülen/cm$^3$, der damit unter Berücksichtigung der Ausdiffusion während der Temperung des heißverformten Linsenrohlings (s.u.) (H$_2$ Verlust durch Ausdiffusion ca. 30%) innerhalb der Grenzen C$_{H2min}$ und C$_{H2max}$ liegt, die durch die Bemessungsregeln (2) und (3) für $\varepsilon$ = 0,1 mJ/cm$^2$ folgendermaßen spezifiziert sind:

$$C_{H2min} \text{ [Moleküle/cm}^3\text{]} = 1,0 \text{ x } 10^8 \, (0,1)^2 \, P$$

$$C_{H2max} \text{ [Moleküle/cm}^3] = 2 \times 10^{19} \text{ (0,1)}$$

Mit $\varepsilon$ = 0,1 mJ/cm$^2$ergibt sich nach dieser Bemessungsregel ein im Quarzglas einzustellender minimaler $H_2$-Gehalt, je nach Pulszahl zwischen 1 x 10$^{17}$ Molekülen/cm$^3$ und 10 x 10$^{17}$ Molekülen/cm$^3$ - und ein maximaler $H_2$-Gehalt von 2 x 10$^{18}$ Molekülen/cm$^3$.

Zum Homogenisieren wird der Quarzglasrohling anschließend in eine Quarzglas-Drehbank eingespannt, zonenweise auf eine Temperatur von ca. 2000 °C erhitzt und dabei verdrillt. Ein dafür geeignetes Homogenisierungsverfahren ist in der EP-A1 673 888 beschrieben. Nach mehrmaligem Verdrillen liegt ein Quarzglaskörper in Form eines Rundstabes mit einem Durchmesser von 80 mm und einer Länge von ca. 800 mm vor, der in drei Richtungen schlierenfrei ist.

Durch eine Heißverformung bei einer Temperatur von 1700 °C und unter Verwendung einer stickstoffgespülten Schmelzform wird daraus ein kreisrunder Quarzglaszylinder mit einem Außendurchmesser von 240 mm und einer Länge von 80 mm gebildet. Nach einem weiteren Tempervorgang, bei der der Quarzglaszylinder unter Luft und Atmosphärendruck auf 1100 °C erhitzt und anschließend mit einer Abkühlrate von 2°C/h auf 900°C abgekühlt wird, wird lediglich noch (im CA-Bereich) eine Spannungsdoppelbrechung von maximal 2 nm/cm gemessen, und die Brechzahlverteilung ist derart homogen, dass der Unterschied zwischen dem Maximalwert und dem Minimalwert unterhalb von 2 x 10$^{-6}$ liegt. Aus den zentralen Bereich des Rohlings wird eine stabförmige Probe mit einer Abmessung von 25 x 25 x 200 mm$^3$ entnommen, die einen $H_2$ Gehalt von ca. 1 x 10$^{18}$ Molekülen/cm$^3$ und ca. 700 Gew-ppm OH aufweist. Die Herstellung der Rohlinge 5 bis 7 erfolgt wie die der Rohlinge 1-4 durch Variation der Flußraten der Einzelmedien. Der $H_2$-Gehalt der erhaltenen Rohlinge wird durch Wahl der Länge des Temperprogramms und unter Berücksichtigung der Diffusion der Temperung des heißverformten Quarzglaszylinders eingestellt.

**• Ergebnisbewertung**

Hinsichtlich des Auftretens von Kompaktierung, Dekompaktierung und induzierter Absorption gemäß Tabelle 1 zeigen die Rohlinge 1, 5 und 7 bei Energiedichten von 0,1 0,2 bzw. 0,05 mJ/cm$^2$ die besten Ergebnisse. Rohling 2 zeigt unter Einwirkung von ultravioletter Strahlung mit einer relativ hohen Energiedichte von 0,3 mJ/cm$^2$ Kompaktierung, was je nach Anwendungsfall in Grenzen tolerierbar sein kann.

**Patentansprüche**

1. Quarzglasrohling für ein optisches Bauteil zur Übertragung ultravioletter Strahlung einer Wellenlänge von 250 nm und kürzer mit einer Glasstruktur im wesentlichen ohne Sauerstoffdefektstellen, einem $H_2$-Gehalt im Bereich von 3 x 10$^{17}$ Moleküle/cm$^3$ bis 2,0 x 10$^{18}$ Moleküle/cm$^3$, einem OH-Gehalt im Bereich von 500 Gew-ppm bis 1000 Gew-ppm, einem Gehalt an SiH-Gruppen von weniger als 2 x 10$^{17}$ Moleküle/cm$^3$, einem Chlorgehalt im Bereich von 60 Gew-ppm bis 120 Gew-ppm, einer Inhomogenität im Brechungsindex $\Delta$n von weniger als 2 ppm und einer Spannungsdoppelbrechung von weniger als 2 nm/cm.

2. Quarzglasrohling nach Anspruch 1, **dadurch gekennzeichnet, dass** der OH-Gehalt im Bereich von 600 Gew-ppm bis 900 Gew-ppm, vorzugsweise im Bereich von 750 Gew-ppm bis 900 Gew-ppm, liegt.

3. Quarzglasrohling nach Anspruch 1 oder 2, **dadurch gekennzeichnet, dass** der $H_2$-Gehalt im Bereich von 5 x 10$^{17}$ Moleküle/cm$^3$ bis 1 x 10$^{18}$ Moleküle/cm$^3$ liegt.

4. Quarzglasrohling nach Anspruch 1, **dadurch gekennzeichnet, dass** der Quarzglasrohling einen Chlorgehalt im Bereich von 80 Gew-ppm bis 100 Gew-ppm aufweist.

5. Verwendung eines Quarzglasrohlings nach einem der Ansprüche 1 bis 4 für ein Bauteil für den Einsatz in der Mikrolithographie in Verbindung mit ultravioletter Strahlung einer Wellenlänge von 250 nm und kürzer, **dadurch gekennzeichnet, dass** für einen Einsatz mit ultravioletter Strahlung einer vorgegebenen Pulsenergiedichte $\varepsilon$ von mindestens 0,05 mJ/cm$^2$ und für eine vorgegebene Pulszahl P ein Quarzglas ausgewählt wird, das einen Mindestwasserstoffgehalt $C_{H2min}$ und einen Maximalwasserstoffgehalt $C_{H2max}$ aufweist, die folgenden Bemessungsregeln genügen:

$$C_{H2min} \text{ [Moleküle/cm}^3\text{]} = 1{,}0 \times 10^8 \; \varepsilon^2 \; P \tag{2}$$

und

$$C_{H2max} \text{ [Moleküle/cm}^3\text{]} = 2 \times 10^{19} \; \varepsilon \tag{3}.$$

**6.** Verwendung eines Quarzglasrohlings nach Anspruch 5, **dadurch gekennzeichnet, dass** ein Quarzglas ausgewählt wird, das einen OH-Gehalt $C_{OH}$ in einem Bereich aufweist, der folgender Bemessungsregel genügt:

$$C_{OH} \text{ [Gew-ppm]} = 1700 \cdot \varepsilon \text{ [mJ/cm}^2\text{]}^{0,4} \qquad \pm 50 \tag{4}$$

**7.** Verwendung eines Quarzglasrohlings nach Anspruch 5, **dadurch gekennzeichnet, dass** die Pulsenergiedichte $\varepsilon$ kleiner als 0,3 mJ/cm$^2$, insbesondere kleiner als 0,15 mJ/cm$^2$ ist.

**Claims**

**1.** A quartz glass blank for an optical component for transmitting ultraviolet radiation of a wavelength of 250 nm and shorter with a glass structure essentially without oxygen defects, an $H_2$ content ranging from $3 \times 10^{17}$ molecules/cm$^3$ to 2.0 to $10^{18}$ molecules/cm$^3$, an OH content ranging from 500 wt ppm to 1000 wt ppm, a content of SiH groups of less than $2 \times 10^{17}$ molecutes/cm$^3$, a chlorine content ranging from 60 wt ppm to 120 wt ppm, an inhomogeneity in the refractive index $\Delta$n of less than 2 ppm and a strain birefringence of less than 2 nm/cm.

**2.** A quartz glass blank as claimed in claim 1, **characterized in that** the OH content is within the range of 600 wt ppm to 900 wt ppm, preferably within the range of 750 wt ppm to 900 wt ppm.

**3.** A quartz glass blank as claimed in claim 1 or 2, **characterized in that** the $H_2$ content is within the range of $5 \times 10^{17}$ molecules/cm$^3$ to $1 \times 10^{18}$ molecules/cm$^3$.

**4.** The quartz glass blank according to claim 1, **characterized in that** the quartz glass blank has a chlorine content ranging from 80 wt ppm to 100 wt ppm.

**5.** Use of a quartz glass blank as claimed in any one of claims 1 to 4 for a component for use in microlithography in combination with ultraviolet radiation of a wavelength of 250 nm and shorter, **characterized in that** for an application with ultraviolet radiation of a predetermined pulse energy density $\varepsilon$ of at least 0.05 mJ/cm$^2$ and for a pre-determined pulse number P, a quartz glass is selected that has a minimum hydrogen content $C_{H2min}$ and a maximum hydrogen content $C_{H2max}$ satisfying the following dimensioning rules:

$$C_{H2min} \text{ [molecules/cm}^3\text{]} = 1.0 \times 10^8 \; \varepsilon^2 \; P \tag{2}$$

and

$$C_{H2max} \text{ [molecules/cm}^3\text{]} = 2 \times 10^{19} \; \varepsilon \tag{3}.$$

**6.** Use of a quartz glass blank as claimed in claim 5, **characterized in that** a quartz glass is selected that has an OH content $C_{OH}$ within a range satisfying the following dimensioning rule:

$$C_{OH} \text{ [wt ppm]} = 1700 \cdot \varepsilon \text{ [mJ/cm}^2\text{]}^{0.4} \qquad \pm 50 \tag{4}$$

**7.** Use of a quartz glass blank as claimed in claim 5, **characterized in that** the pulse energy density $\varepsilon$ is less than 0.3 mJ/cm$^2$, particularly less than 0.15 mJ/cm$^2$.

**Revendications**

1. Ebauche en verre de quartz pour un composant optique pour la transmission de rayonnement ultraviolet d'une longueur d'ondes inférieure ou égale à 250 nm avec une structure de verre essentiellement sans défaut d'oxygène, une teneur en $H_2$ comprise entre $3 \times 10^{17}$ de molécules/cm$^3$ et $2,0 \times 10^{18}$ molécules/cm$^3$, une teneur en OH comprise entre 500 ppm en poids et 1000 ppm en poids, une teneur en groupes SiH inférieure à $2 \times 10^{17}$ molécules/cm$^3$, une teneur en chlore comprise entre 60 ppm en poids et 120 ppm en poids, une inhomogénéité dans l'indice de réfraction An inférieure à 2 ppm et une double réfraction de tension inférieure à 2 nm/cm.

2. Ebauche en verre de quartz selon la revendication 1, **caractérisée en ce que** la teneur en OH est comprise entre 600 ppm en poids et 900 ppm en poids, de préférence entre 750 ppm en poids et 900 ppm en poids.

3. Ebauche en verre de quartz selon la revendication 1 ou 2, **caractérisée en ce que** la teneur en $H_2$ est comprise entre $5 \times 10^{17}$ de molécules/cm$^3$ et $1 \times 10^{18}$ molécules/cm$^3$.

4. Ebauche en verre de quartz selon la revendication 1 ou 2, **caractérisée en ce que** la teneur en chlore comprise entre 80 ppm en poids et 100 ppm en poids.

5. Utilisation d'une ébauche de verre de quartz selon l'une des revendications 1 à 4 pour un composant pour l'emploi dans la microlithographie en liaison avec le rayonnement ultraviolet d'une longueur d'ondes inférieure ou égale à 250 nm, **caractérisée en ce que** pour l'emploi avec le rayonnement ultraviolet d'une densité d'énergie ε en mode impulsionnel prédéterminé d'au moins 0,05 mJ/cm$^2$, et pour un nombre d'impulsions P prédéterminé, on sélectionne un verre de quartz qui présente une teneur minimale en hydrogène $C_{H2min}$ et une teneur maximale en hydrogène $C_{H2max}$ qui répondent aux règles de mesure suivantes:

$$C_{H2min} \text{ [molécules/cm}^3\text{]} = 1,0 \times 10^8 \ \varepsilon^2 \ P \qquad (2)$$

et

$$C_{H2max} \text{ [molécules/cm}^3\text{]} = 2,0 \times 10^{19} \ \varepsilon \qquad (3)$$

6. Utilisation d'une ébauche de verre de quartz selon la revendication 5, **caractérisée en ce qu'**on sélectionne un verre de quartz avec une teneur en OH qui répond à la règle de mesure suivante

$$C_{OH} \text{ [ppm en poids]} = 1700. \ \varepsilon \ \text{[mJ/cm}^2\text{]}^{0,4} \pm 50 \qquad (4)$$

7. Utilisation d'une ébauche de verre de quartz selon la revendication 8 ou 9, **caractérisée en ce que** la densité d'énergie ε en mode impulsionnel est inférieure à 0,3 mJ/cm$^2$, de préférence inférieure à 0,15 mJ/cm$^2$.

**Fig. 1**